# EUROPEAN PATENT APPLICATION

(11) **EP 4 840 312 A1**
(43) Date of publication of application: **18.11.2026**
(21) Application number: 26177080.4
(22) Date of filing: 07.05.2026
(51) Int. Cl.: A01P 1/00, A01N 25/04, A01N 25/10, A01N 25/24, A01N 59/06, A01N 59/16, A01N 59/20, C09D 5/14

(54) **A BACTERICIDAL PREPARATION FOR PROTECTING STRUCTURES AGAINST MICROBIAL DEGRADATION**

(30) Priority: 13.05.2025 CZ 202542820 U
(71) Applicant: Ceské vysoké ucení technické v Praze, 16000 Praha 6 (CZ); Svuom s.r.o., 17000 Praha (CZ)
(72) Inventor: Zabloudil, Adam, 39601 Humpolec (CZ); Pokorny, Petr, 27062 Rynholec (CZ); Kolisko, Jiri, 16900 Praha (CZ); Tej, Petr, 16000 Praha (CZ); Kreislova, Katerina, 19016 Praha (CZ)
(74) Representative: Poljak, Michal

(57) **Abstract**

The present invention relates to a bactericidal preparation for protecting structures against microbial degradation, comprising: 0.5 to 5.0 wt. % of nanoparticles of at least one metal oxide (e.g. ZnO, CuO and/or MgO); 0.1 to 5.0 wt. % of BaTiO₃; and 90.0 to 99.4 wt. % of a carrier matrix selected from water, an aqueous dispersion of an acrylate polymer and/or an epoxy resin.

## Description

### Technical field

This invention relates to a bactericidal preparation for long-term protection of building and structural materials against microbial degradation. It is primarily intended for applications in civil and industrial construction, water management infrastructure, energy sector and preservation of historic buildings, where structures are at risk of attack by specific bacterial strains.

### Prior art

In the prior art, there are known agents for protecting structures against microbial degradation, the active ingredients of which are primarily: heavy metal compounds (e.g. AgNO₃, Cu²⁺ salts), organic biocides (e.g. isothiazolinones, phenols, quaternary ammonium salts), and more recently also metal and metal oxide nanoparticles (e.g. Ag, ZnO, TiO₂ , CuO, MgO).

A disadvantage of these known solutions is their high toxicity to higher organisms (particularly heavy metal compounds), limited efficacy in environments with specific bacterial flora (all three groups mentioned above), and degradation instability due to UV radiation and atmospheric conditions (particularly organic biocides).

The Chinese patent application CN 105694732 A describes a water-resistant, bactericidal coating composition containing 10-20 wt. % of ZnO nanoparticles, 20-30 wt. % of TiO₂ nanoparticles, and 60-80 wt. % of coating matrix.

The Korean patent KR 102300678 B1 describes a sterilising composition containing 10-90 wt. % of ZnO and 10-90 wt. % of a mixture of CuO and TiO₂ nanoparticles in a weight ratio of 1:4 to 4:1.

In the review article by Straumal et al., Materials 2024, 17(23), 5847; https://doi.org/10.3390/ma17235847, entitled 'Antibacterial Properties and Biocompatibility of Multicomponent Titanium Oxides: A Review', the use of titanates in coatings is described, including BaTiO₃ with good adhesion and antioxidant (p. 9 of the aforementioned article) and bactericidal properties (p. 18 of the aforementioned article).

In the prior art, there is therefore a need, and the aim of the invention is to provide a nontoxic, effective and stable bactericidal preparation for protecting structures against microbial degradation.

### Summary of the invention

The aim is achieved by a bactericidal preparation for protecting structures against microbial degradation, comprising:
a. 0.5 to 5.0 wt. % of nanoparticles of at least one metal oxide, preferably zinc oxide ZnO, copper oxide CuO and/or magnesium oxide MgO;
b. 0.1 to 5.0 wt. % (preferably 0.1 to 1.0 wt. %) of nanoparticles of barium titanate BaTiO₃ (or barium-titanium dioxide BaO-TiO₂); and
c. 90.0 to 99.4 wt. % of a carrier matrix selected from water, an aqueous dispersion of an acrylate polymer and/or an epoxy resin.

The underlying idea of the bactericidal preparation according to this invention lies in the fact that nanoparticles of at least one metal oxide disrupt the bacterial cell wall through ionic stress and oxidative damage, whereas barium titanate generates surface electric fields on a microscopic scale, which facilitates ion exchange and promotes the penetration of the nanoparticles into bacterial cells. The result is a synergistic increase in bactericidal efficacy of up to 40-60% compared to the application of the nanoparticles of at least one metal oxide alone in the aforementioned carrier matrix.

Among the advantages of the bactericidal preparation in question is the synergistic effect of barium titanate nanoparticles on the bactericidal effect of metal oxide nanoparticles, which ensures long-term and stable protection of structures against microbial degradation. The bactericidal preparation also exhibits high resistance to UV radiation, hydrolysis and temperature fluctuations; the low concentration of active substances (< 10.0 wt. %) minimises the environmental impact, and the multifactorial mechanism of action (ionic stress, oxidative damage and the generation of surface electric fields) prevents bacterial adaptation.

The term 'acrylate polymer' refers to salts, esters, amines, conjugated bases and copolymers of acrylic acid, methacrylic acid and their derivatives, having at least these two functional groups: a vinyl group for polymerisation and a carboxyl group for derivatisation (e.g. polyacrylate, polymethacrylate, polycyanoacrylate, etc.). These acrylate polymers are commonly used in the construction industry, in paints and in adhesives.

The term 'epoxy resin' refers to polymers containing a reactive epoxy group, e.g. bisphenol-A-epichlorohydrin and/or bisphenol-F-epichlorohydrin. The term "curing agent" refers to an agent containing an amine, carboxyl, anhydride, phenol, alcohol or thiol group, e.g. benzyl alcohol, isophorone diamine, hexane-1,6-diamine and/or trimethylhexane-1,6-diamine.

In a preferred embodiment, the metal oxide nanoparticles have an average size of 20-100 nm and a specific surface area of >30 m²/g. In a preferred embodiment, the BaTiO₃ nanoparticles have an average size of 50-100 nm.

### Examples

### Example 1

A bactericidal preparation was prepared as a dispersion for application to the surface of concrete structures. This dispersion comprises:
a. 2.0 wt. % of ZnO nanoparticles with an average size of 20-100 nm, preferably 20-30 nm, and a specific surface area >50 m²/g;
b. 0.5 wt. % of BaTiO₃ nanoparticles with a diameter of 50-100 nm; and
c. 97.5 wt. % of a carrier matrix in the form of an aqueous dispersion of an acrylate polymer with a solid content of at least 40 wt. % and a viscosity of 300-1500 mPa·s, preferably e.g. 400 to 500 mPa·s (for acrylic coating bases without fillers) or 1200 mPa·s (for acrylic coatings with fillers).

The acrylate polymer may be polyacrylate (sodium, potassium), polycyanoacrylate (sodium, potassium), polyacrylamide, polymethylacrylate, polymethacrylate and/or polymethyl methacrylate.

### Preparation procedure:

1. Metal oxide nanoparticles and BaTiO₃ were dispersed using ultrasonic homogenisation for 10 minutes at a power of 200 W in water (with the amount of water specified as the maximum amount of water intended for diluting the aqueous dispersion of the acrylic polymer used).
2. The suspension prepared in this manner was slowly added to the aqueous dispersion of the acrylate polymer whilst stirring, and further homogenised at a speed of 300-500 rpm for 30 minutes to form a bactericidal preparation.

Alternatively, metal oxide nanoparticles and BaTiO₃ can be slowly added directly to the aqueous acrylic polymer dispersion whilst stirring (i.e. without prior dispersion in water) and further homogenised at a speed of 300-500 rpm for 30 minutes to form a bactericidal preparation.

### Application:

1. The bactericidal preparation in the form of a coating was applied by brush in a single layer approximately 100 µm thick to a cleaned concrete surface.
2. The drying time at 23 °C was approximately 2 hours.
3. Full curing was achieved after 7 days under laboratory conditions.

### Example 2

The bactericidal preparation was prepared as a dispersion for application to the surface of concrete structures. This dispersion comprises:
a. 2.5 wt. % of ZnO nanoparticles with an average size of 20-100 nm, preferably 20-30 nm, and a specific surface area >50 m²/g;
b. 0.6 wt. % of BaTiO₃ nanoparticles with a diameter of 50-100 nm, preferably 60-80 nm; and
c. 96.9 wt. % of a carrier matrix in the form of an epoxy resin.

The epoxy resin may be a mixture of bisphenol-A-epichlorohydrin and bisphenol-F-epichlorohydrin in a weight ratio of 7:1 to 5:2. The epoxy resin may or may not be cured with a curing agent (e.g. a mixture of 30-60 wt. % of benzyl alcohol, 20-30 wt. % of isophorone diamine, 10-20 wt. % of hexane-1,6-diamine and 10-20 wt. % of trimethylhexane-1,6-diamine).

### Preparation procedure:

1. Metal oxide nanoparticles and BaTiO₃ were slowly dispersed in the aforementioned epoxy resin for 2 minutes whilst stirring at a speed of 300-450 rpm.
2. The curing agent mentioned above was slowly added to the dispersion prepared in this way, whilst stirring, in a volume ratio of 2:1 (epoxy resin : curing agent), and this suspension was then homogenised at a speed of 300-450 rpm for 3 minutes to form a bactericidal preparation.

Alternatively, metal oxide nanoparticles and BaTiO₃ may be pre-dispersed in a solvent approved by the manufacturer of the epoxy resin.

Application as in Example 1.

### Example 3

A bactericidal preparation was prepared as a dispersion for application to the surface of concrete structures. This dispersion comprises:
a. 3.0 wt. % of CuO nanoparticles with an average size of 20-100 nm, preferably 40-60 nm, and a specific surface area >30 m²/g;
b. 0.4 wt. % of BaTiO₃ nanoparticles with a diameter of 50-100 nm, preferably 70-100 nm; and
c. 96.6 wt. % of a carrier matrix in the form of an aqueous dispersion of an acrylate polymer with a solid content of at least 45 wt. % and a viscosity of 300-1500 mPa·s, preferably e.g. 400 to 500 mPa·s (for acrylic coating bases without fillers) or 1200 mPa·s (for acrylic coatings with fillers).

Preparation and application procedure as in Example 1.

### Example 4

A bactericidal preparation was prepared as a dispersion for application to the surface of concrete structures. This dispersion comprises:
a. 0.8 wt. % of CuO nanoparticles with an average size of 20-100 nm, preferably 30-50 nm (e.g. 40 nm), and a specific surface area >30 m²/g;
b. 0.2 wt. % of BaTiO₃ nanoparticles with a diameter of 50-100 nm, preferably 60-80 nm; and
c. 99.0 wt. % of a carrier matrix in the form of water.

### Preparation method:

1. The metal oxide and BaTiO₃ nanoparticles were dispersed using ultrasonic homogenisation for 10 minutes at a power of 200 W in water.
2. The suspension prepared in this way was further homogenised under stirring at 300-500 rpm for 30 minutes to form a bactericidal preparation.

Application as in Example 1.

### Example 5

The bactericidal preparation was prepared as a dispersion for application to the surface of concrete structures. This dispersion comprises:
a. 4.0 wt. % of CuO nanoparticles with an average size of 20-100 nm, preferably 40-60 nm (e.g. 50 nm), and a specific surface area >50 m²/g;
b. 1.0 wt. % of BaTiO₃ nanoparticles with a diameter of 50-100 nm, preferably 70-90 nm (e.g. 80 nm); and
c. 95.0 wt. % of a carrier matrix in the form of an epoxy resin.

The preparation and application procedure is the same as in Example 2.

### Example 6

A bactericidal preparation was prepared as a dispersion for application to the surface of concrete structures. This dispersion comprises:
a. 1.5 wt. % of MgO nanoparticles with an average size of 20-100 nm, preferably 30-50 nm, and a specific surface area >60 m²/g;
b. 0.3 wt. % of BaTiO₃ nanoparticles with a diameter of 50-100 nm, preferably 50-70 nm; and
c. 98.2 wt. % of a carrier matrix in the form of an aqueous dispersion of an acrylate polymer with a solid content of at least 40 wt. % and a viscosity of 300-1500 mPa·s, preferably e.g. 400 to 500 mPa·s (for acrylic coating bases without fillers) or 1200 mPa·s (for acrylic coatings with fillers).

The preparation and application procedure is the same as in Example 1.

### Example 7

A bactericidal preparation was prepared as a dispersion for application to the surface of concrete structures. This dispersion comprises:
a. 0.5 wt. % of MgO nanoparticles with an average size of 20-100 nm, preferably 30-50 nm (e.g. 40 nm), and a specific surface area >30 m²/g;
b. 0.1 wt. % of BaTiO₃ nanoparticles with a diameter of 50-100 nm, preferably 55-75 nm (e.g. 65 nm); and
c. 99.4 wt. % of a carrier matrix in the form of water.

The preparation and application procedure is the same as in Example 4.

### Example 8

A bactericidal preparation was prepared as a dispersion for application to the surface of concrete structures. This dispersion comprises:
a. 2.0 wt. % of MgO nanoparticles with an average size of 20-100 nm, preferably 35-45 nm, and a specific surface area >50 m²/g;
b. 0.8 wt. % of BaTiO₃ nanoparticles with a diameter of 50-100 nm, preferably 80-100 nm; and
c. 97.2 wt. % of a carrier matrix in the form of an epoxy resin.

The preparation and application procedure is the same as in Example 2.

### Example 9

A bactericidal preparation was prepared as a dispersion for application to the surface of concrete structures. This dispersion comprises:
a. 2.0 wt. % of a mixture of ZnO nanoparticles with an average size of 20-100 nm, preferably 20-30 nm (e.g. 25 nm), and CuO nanoparticles with an average size of 20-100 nm, preferably 40-50 nm (e.g. 45 nm) in a weight ratio of 1:1, wherein both the ZnO and CuO nanoparticles have a specific surface area >50 m²/g;
b. 0.5 wt. % of BaTiO₃ nanoparticles with a diameter of 50-100 nm, preferably 70-80 nm (e.g. 75 nm); and
c. 97.5 wt. % of a carrier matrix in the form of an aqueous dispersion of an acrylate polymer with a solid content of at least 40 wt. % and a viscosity of 300-1500 mPa·s, preferably e.g. 400 to 500 mPa·s (for acrylic coating bases without fillers) or 1200 mPa·s (for acrylic coatings with fillers).

Preparation and application procedure as in Example 1.

### Example 10

A bactericidal preparation was prepared as a dispersion for application to the surface of concrete structures. This dispersion comprises:
a. 3.0 wt. % of a mixture of CuO nanoparticles with an average size of 20-100 nm, preferably 30-50 nm (e.g. 40 nm), and MgO nanoparticles with an average size of 20-100 nm, preferably 30-40 nm (e.g. 35 nm) in a weight ratio of 2:1, wherein both the CuO and MgO nanoparticles have a specific surface area >50 m²/g;
b. 0.6 wt. % of BaTiO₃ nanoparticles with a diameter of 50-100 nm, preferably 80-100 nm (e.g. 90 nm); and
c. 96.4 wt. % of a carrier matrix in the form of water.

The preparation and application procedure is the same as in Example 4.

### Example 11

A bactericidal preparation was prepared as a dispersion for application to the surface of concrete structures. This dispersion comprises:
a. 2.0 wt. % of ZnO nanoparticles with an average size of 20-100 nm, preferably 20-30 nm (e.g. 25 nm), and a specific surface area >50 m²/g;
b. 0.5 wt. % of BaTiO₃ nanoparticles with a diameter of 50-100 nm, preferably 60-90 nm; and
c. 97.5 wt. % of a carrier matrix in the form of a mixture of water and an aqueous dispersion of an acrylate polymer with a solid content of at least 40 wt. % and a viscosity of 300-1500 mPa·s, preferably e.g. 400 to 500 mPa·s (for acrylic coating bases without fillers) or 1200 mPa·s (for acrylic coatings with fillers), in a weight ratio of 1:1.

Preparation and application procedure as in Example 1.

### Example 12

On samples A, B, D and E, made from ultra-high-performance concrete (UHPC, 'ultra-high performance concrete') with a diameter of 25 mm and a thickness of 8 mm, the surface was modified by applying a bactericidal preparation containing an aqueous dispersion of an acrylic polymer and nanoparticles (a mixture of nCu or nZnO or nCuO with n-BaTiO₃ or n-BaTiO₃ only) as shown in Table 1 below. Sample 0 contained only pure (100 wt. %) acrylate dispersion without nanoparticles.

**Table 1. Composition of samples A, B, C, E and 0.**

| **Sample** | **Metal/metal oxide nanoparticle content [wt. %]** | **Content of n-BaTiO₃ [wt. %]** | **Content of aqueous acrylate polymer dispersion [wt. %]** |
|---|---|---|---|
| A | 4 wt. % n-Cu | 4 wt. % n-BaTiO₃ | 92 wt. % |
| B | 4 wt. % n-ZnO | 4 wt. % n-BaTiO₃ | 92 wt. % |
| D | 4 wt. % n-CuO | 4 wt. % n-BaTiO₃ | 92 wt. % |
| E | none | 4 wt. % n-BaTiO₃ | 96 wt. % |
| 0 | none | none | 100 wt. % |

The antibacterial activity of samples A, B, D, E and 0 was determined using a modified contact test method in accordance with 'Quantitative methods for the determination of antibacterial activity of plastic (synthetic) and other non-porous surfaces and materials' as per CSN ISO 22196:2011. The following microorganisms were tested: *Pseudomonas aeruginosa* (ATCC 15442), *Escherichia coli* (ATCC 8739), *Acetobacter aceti* (CCM 3620), *Nitrobacter sp.* (DSM 113595) and *Desulfovibrio desulfuricans* (ATCC 29577).

The preparation of the initial microorganism suspensions was carried out in accordance with CSN EN 12353. The test suspensions were obtained by adjusting the initial suspensions to concentrations of 2.5 × 10⁵ to 10 × 10⁵ cfu/ml.

Samples A, B, D, E and 0, and the control sample 'reference plastic material' (dimensions 25 × 25 × 2 mm) were tested in a 24-hour exposure test in four replicates. The samples were contaminated with 100 µl of the test suspension, covered with a sterile cover film (20 × 20 mm), and the film was gently pressed down so that the test suspension spread to the edges. The samples and the control were placed in a desiccator and maintained at a temperature of 20 ± 1 °C and a relative humidity of over 90% throughout the exposure period (24 h). After the exposure period, each contaminated sample and the control were placed in a sterile conical plastic tube containing 10 ml of neutraliser (30 g/l Tween 80, 4 g/l sodium dodecyl sulphate, 3 g/l lecithin) and sterile glass beads (approx. 5 g), and shaken for 30 seconds. Before placing the sample in the neutraliser, the cover film was removed and also placed in the neutraliser, where it was shaken together with the sample. A dilution series was then prepared and cultured on the appropriate agar media (blood agar, tryptone soy agar, mannitol agar, R2A medium, sulphate API agar without sodium lactate) at the corresponding temperatures and under aerobic or anaerobic conditions.

After cultivation, a count was performed and the results evaluated, with the results shown in Table 2 as a reduction in antibacterial activity in log orders calculated from the increase in CFU per 1 cm² of the tested material sample area after subtracting the control sample, from all 4 replicates for each tested microorganism and exposure (total contaminated area 1600 mm² and volume 400 µl of test suspension).

Samples A, B, D and E exhibited antibacterial activity against all tested microorganisms. Sample 0 either showed no antibacterial activity or only marginal antibacterial activity. Samples A and B exhibited the highest antibacterial activity against *P. aeruginosa* and E. *coli,* whilst samples A, B, D and E exhibited similarly high antibacterial activity against A. *aceti, Nitrobacter sp.* and *D. desulfuricans.*

**Table 2. Testing of the antibacterial activity of modified material sample surfaces.**

| **Tested microorganism** | **Reduction in log orders (antibacterial activity)** | | | | |
|---|---|---|---|---|---|
| | **A** | **B** | **D** | **E** | **0** |
| *P. aeruginosa* ATCC 15442 | 3.71 log | 3.00 log | 2.01 log | 2.12 log | 1.10 log |
| *E. coli* ATCC 8739 | > 3.41 log | > 3.41 log | 2.79 log | 3.22 log | 2.01 log |
| *A. aceti* CCM 3620 | > 3.09 log | > 3.09 log | > 3.09 log | > 3.09 log | 0.46 log |
| *Nitrobacter sp.* DSM 113595 | > 3.34 log | > 3.34 log | > 3.34 log | > 3.34 log | 0.92 log |
| *D. desulfuricans* ATCC 29577 | > 3.07 log | > 3.07 log | > 3.07 log | > 3.07 log | 1.04 log |

### Industrial applicability

The bactericidal preparation described above can be used to protect building and construction materials against biological degradation, as well as for the anti-corrosion protection of metal structures, the protection of wastewater treatment plant surfaces and/or the protection of historical monuments.

## Claims

1. A bactericidal preparation for protecting structures against microbial degradation, **characterised in that** it comprises:
a. 0.5 to 5.0 wt. % of nanoparticles of at least one metal oxide;
b. 0.1 to 5.0 wt. % of BaTiO₃ nanoparticles; and
c. 90.0 to 99.4 wt. % of a carrier matrix selected from water, an aqueous dispersion of an acrylate polymer and/or an epoxy resin.

2. The bactericidal preparation according to claim 1, **characterised in that** the metal oxide is ZnO, CuO and/or MgO.

3. The bactericidal preparation according to claim 1 or 2, **characterised in that** the metal oxide nanoparticles have an average size of 20-100 nm and a specific surface area >30 m²/g.

4. The bactericidal preparation according to any of claims 1 to 3, **characterised in that** the BaTiO₃ nanoparticles have an average size of 50-100 nm.
